# EUROPEAN PATENT APPLICATION

(11) **EP 4 697 250 A1**
(43) Date of publication of application: **18.02.2026**
(21) Application number: 24788608.8
(22) Date of filing: 01.04.2024
(51) Int. Cl.: G06Q 10/30, G06Q 30/018, G06Q 10/0833, G06Q 50/04

(54) **INFORMATION PROCESSING METHOD, INFORMATION PROCESSING DEVICE, AND PROGRAM**

(30) Priority: 10.04.2023 US 202363458238 P
(71) Applicant: Panasonic Intellectual Property Management Co., Ltd., Kadoma-shi, Osaka 571-0057 (JP)
(72) Inventor: YAMAMOTO, Kakuya, Kadoma-shi, Osaka 571-0057 (JP); NAKASAKA, Ayaka, Kadoma-shi, Osaka 571-0057 (JP); UNAGAMI, Yuji, Kadoma-shi, Osaka 571-0057 (JP)
(74) Representative: Appelt, Christian W.
(86) International application number: PCT/JP2024/013401
(87) International publication number: WO 2024/214581

(57) **Abstract**

An information processing method includes: obtaining related information that is related to a second item generated based on a first item and includes at least first identification information identifying a first non-fungible token (NFT) associated one-to-one with the first item (S201); and storing, in a distributed ledger, a second NFT that is associated one-to-one with the second item and includes the related information as metadata (S216).

## Description

### [Technical Field]

The present invention relates to an information processing method, an information processing device, and a program.

### [Background Art]

As an example of a method of evaluating the impact of human consumption activities on the environment, the life cycle of a product may be evaluated (see Non Patent Literature (NPL) 1).

### [Citation List]

### [Non Patent Literature]

NPL 1: "Discovering All Environmental Effects: How Life Cycle Assessment with LCA Software Works" [online], iPoint-systems gmbh, [searched on January 10, 2024], the Internet <URL:https://go.ipoint-systems.com/blog/discovering-all-environm ental-effects-how-life-cycle-assessment-with-lca-software-works>

### [Summary of Invention]

### [Technical Problem]

The management of the life cycle of a product requires the management of the history of items appearing in the life cycle of the product. If the history of the items appearing in the life cycle of a product is not appropriately managed, an appropriate circulation of the life cycle of the product is obstructed.

Hence, the present invention provides an information processing method and the like that support an appropriate management of the history of an item appearing in the life cycle of a product.

### [Solution to Problem]

An information processing method according to an aspect of the present invention includes: obtaining related information that is related to a second item generated based on a first item and includes at least first identification information identifying a first non-fungible token (NFT) associated one-to-one with the first item; and storing, in a distributed ledger, a second NFT that is associated one-to-one with the second item and includes the related information as metadata.

Note that these general or specific aspects may be implemented using a system, a device, an integrated circuit, a computer program, or a computer-readable recording medium such as a compact disc read-only memory (CD-ROM), or any combination of systems, devices, integrated circuits, computer programs, and recording media.

### [Advantageous Effects of Invention]

According to the present invention, it is possible to support an appropriate management of the history of an item appearing in the life cycle of a product.

### [Brief Description of Drawings]

[FIG. 1]

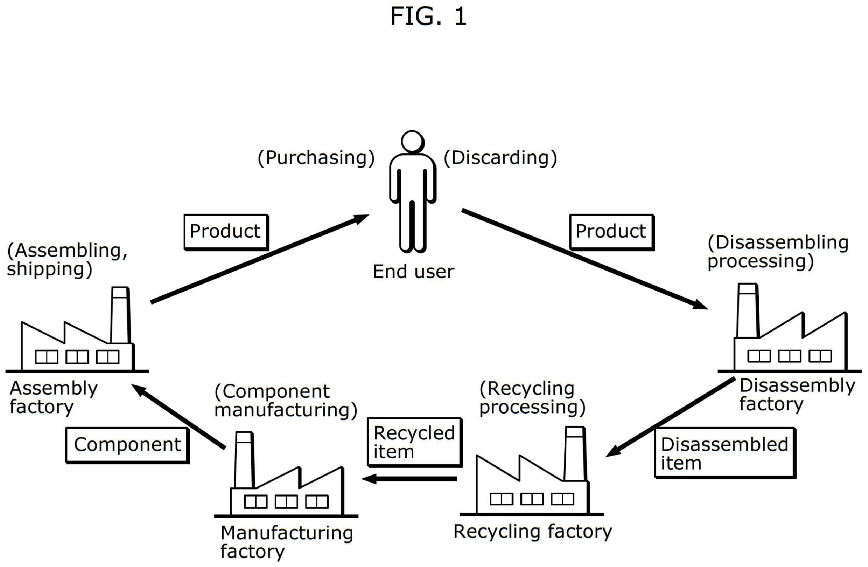

   FIG. 1 is a schematic diagram illustrating the life cycle of an ordinary product.
[FIG. 2]

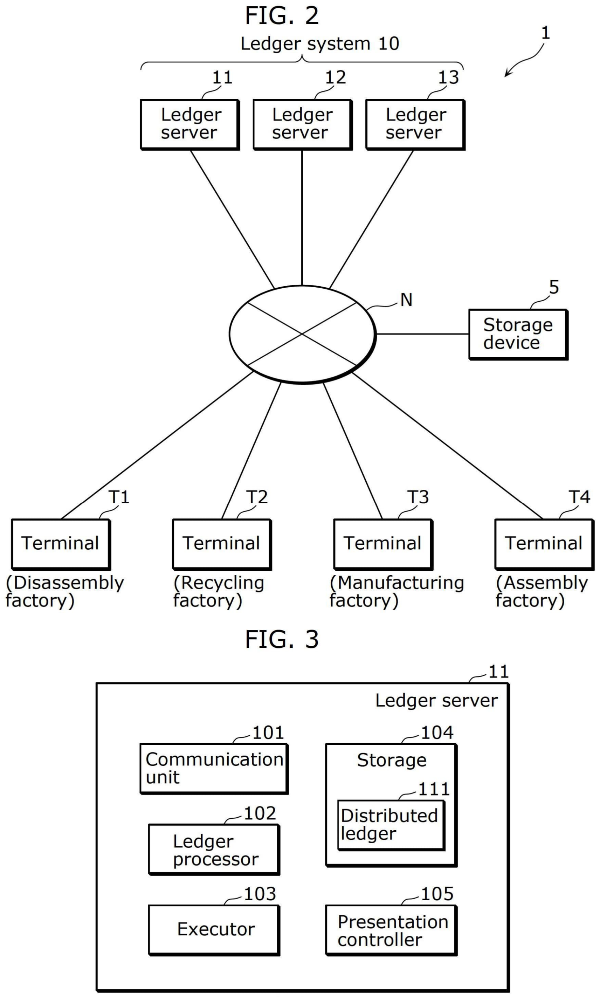

   FIG. 2 is a schematic diagram illustrating the general configuration of an information processing system in an embodiment.
[FIG. 3]
   FIG. 3 is a block diagram illustrating a functional configuration of a ledger server in an embodiment.
[FIG. 4]

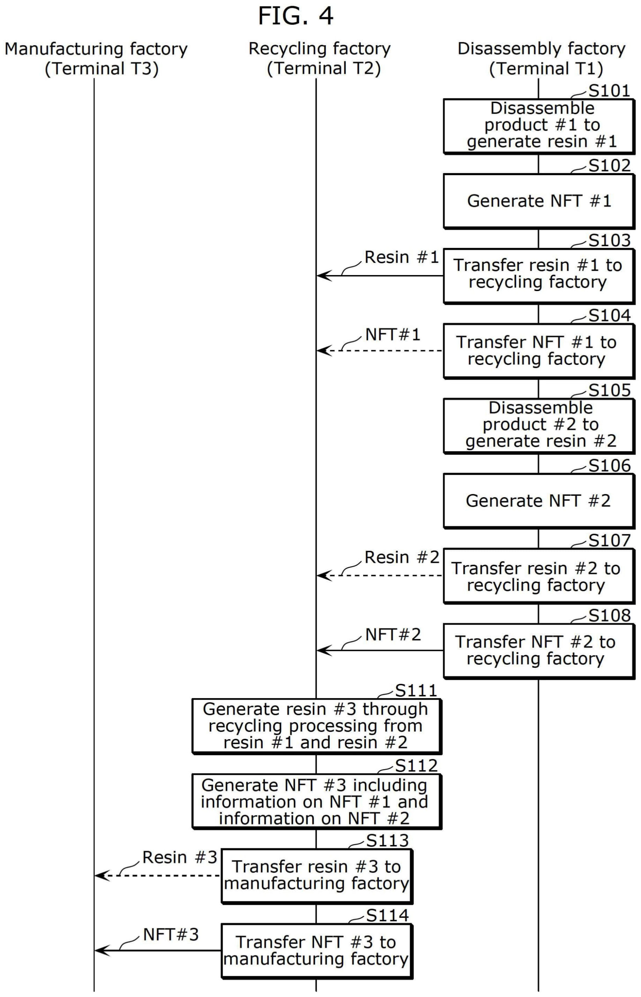

   FIG. 4 is a first explanatory diagram illustrating an example of delivery of an item and an NFT in an embodiment.
[FIG. 5]

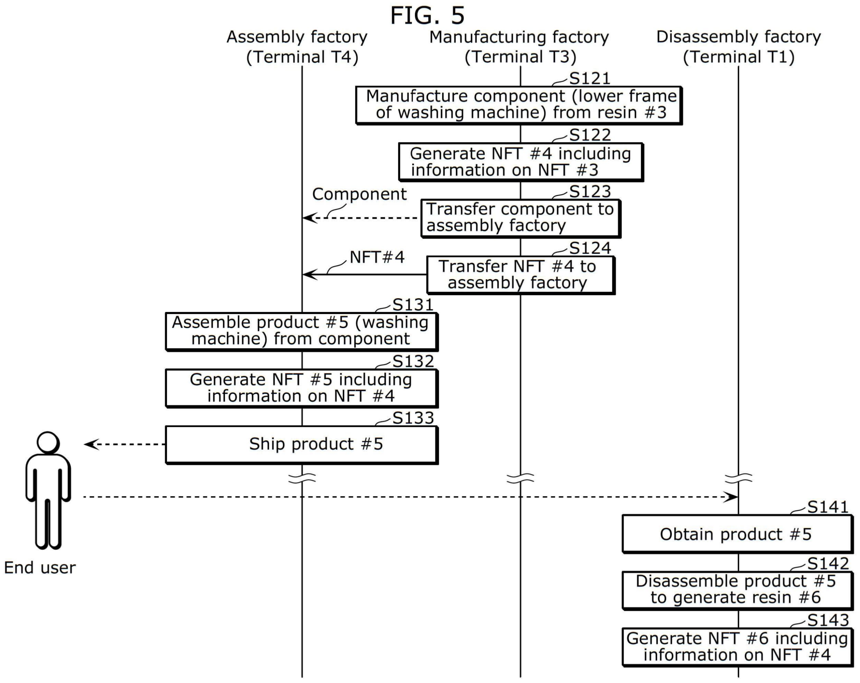

   FIG. 5 is a second explanatory diagram illustrating an example of delivery of an item and an NFT in an embodiment.
[FIG. 6]

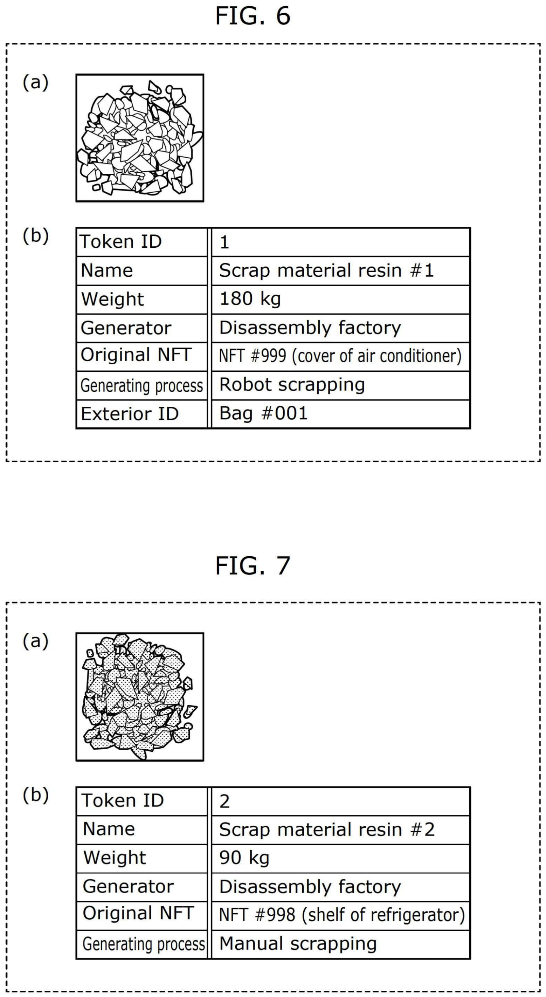

   FIG. 6 is an explanatory diagram of a first example of disassembled items in an embodiment.
[FIG. 7]
   FIG. 7 is an explanatory diagram of a second example of disassembled items in an embodiment.
[FIG. 8]

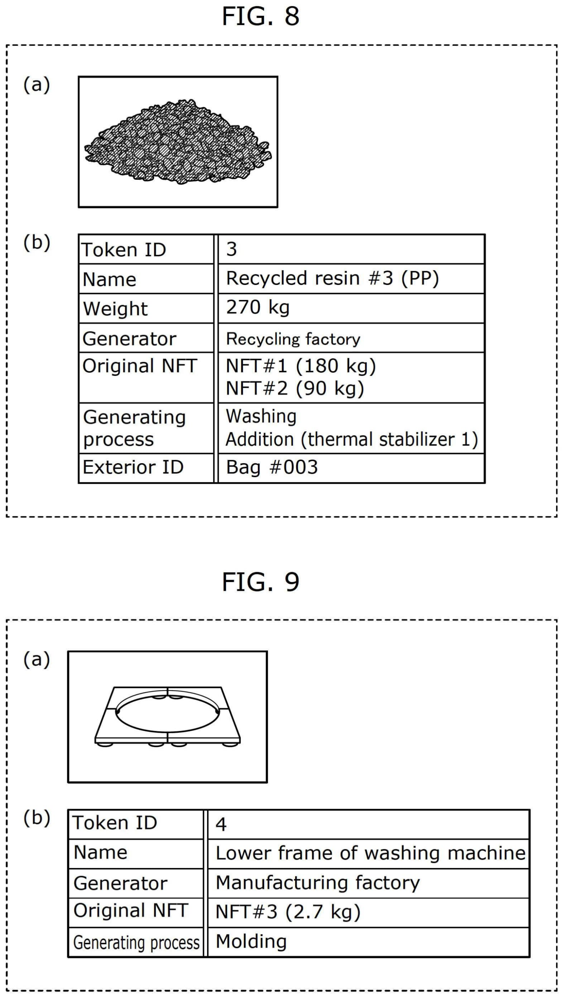

   FIG. 8 is an explanatory diagram of an example of a recycled item in an embodiment.
[FIG. 9]
   FIG. 9 is an explanatory diagram of an example of a component in an embodiment.
[FIG. 10]

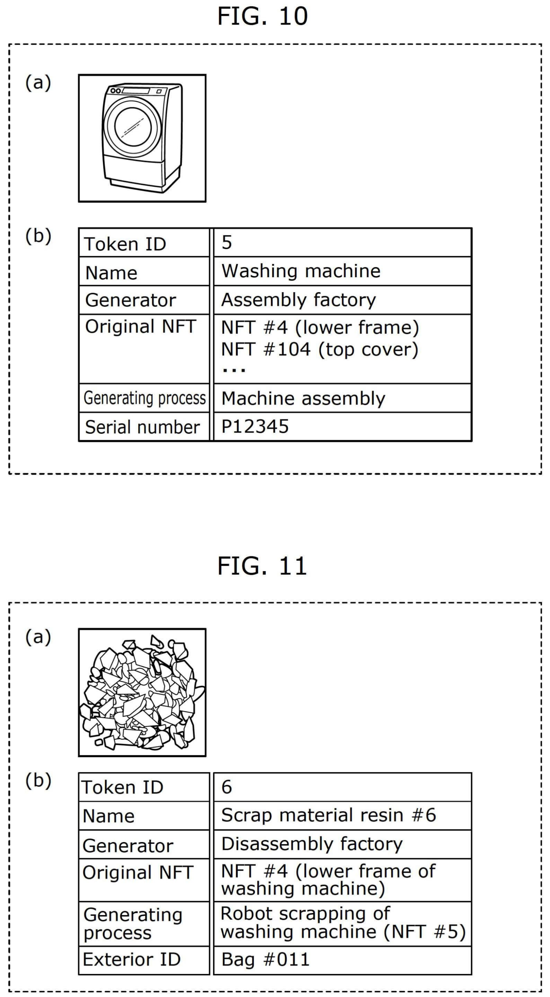

   FIG. 10 is an explanatory diagram of an example of a product in an embodiment.
[FIG. 11]
   FIG. 11 is an explanatory diagram of a third example of disassembled items in an embodiment.
[FIG. 12]

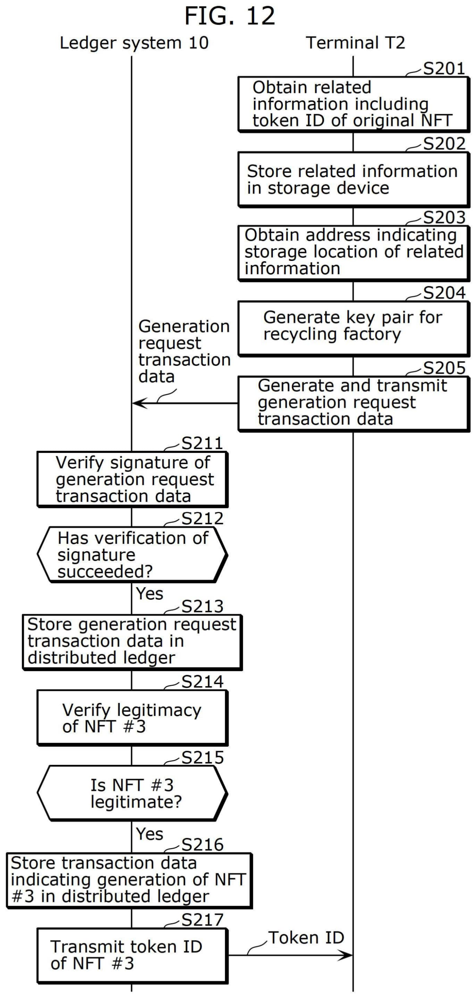

   FIG. 12 is a first sequence diagram illustrating generation processing of generating an NFT in an embodiment.
[FIG. 13]

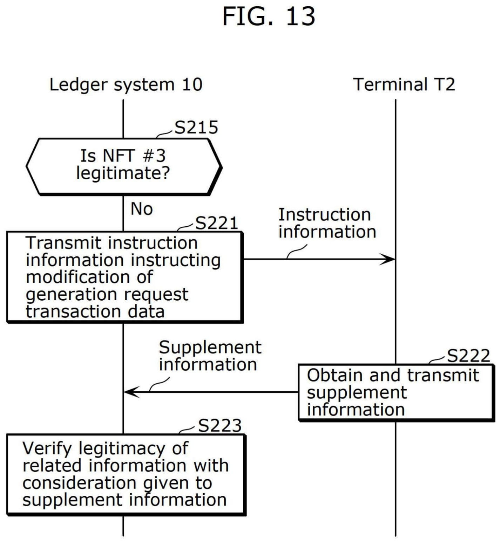

   FIG. 13 is a second sequence diagram illustrating generation processing of generating an NFT in an embodiment.
[FIG. 14]

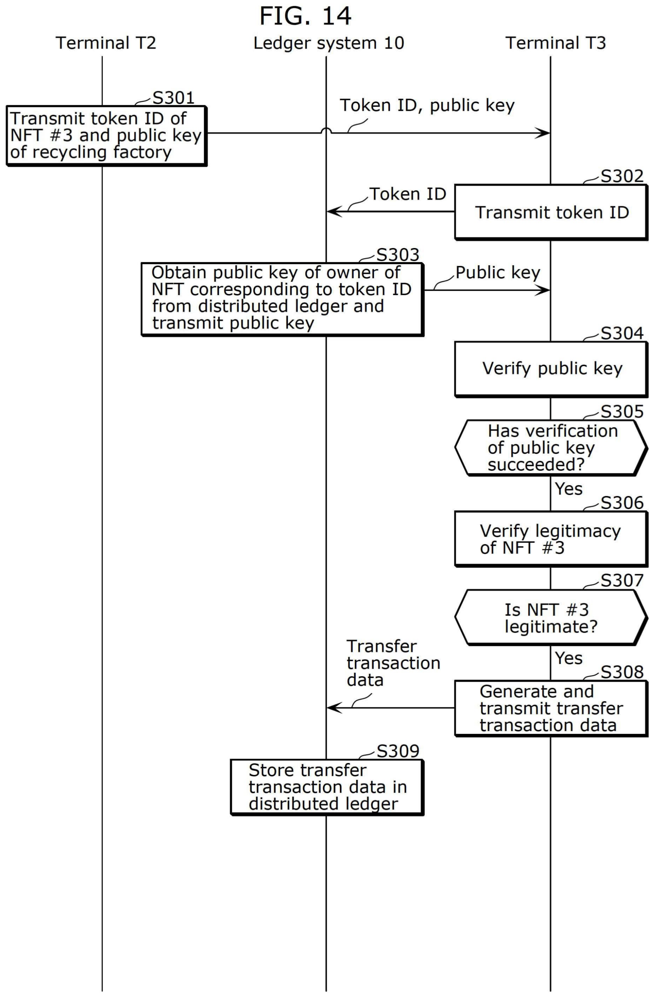

   FIG. 14 is a first sequence diagram illustrating transfer processing of transferring an NFT in an embodiment.
[FIG. 15]

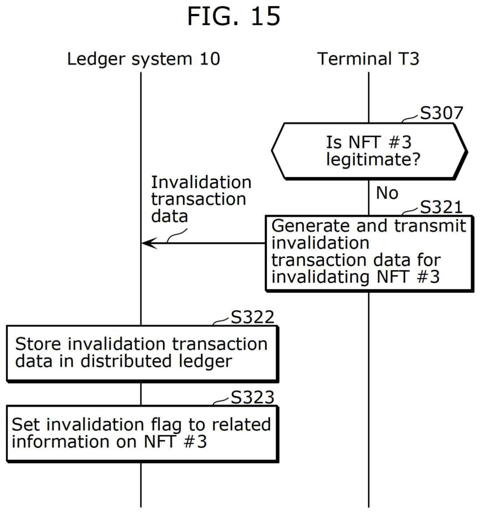

   FIG. 15 is a second sequence diagram illustrating transfer processing of transferring an NFT in an embodiment.
[FIG. 16]

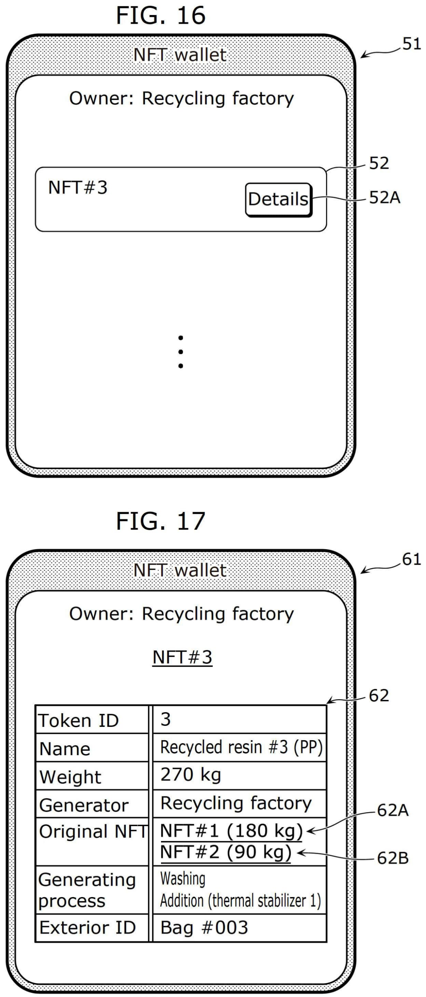

   FIG. 16 is an explanatory diagram illustrating a first example of a display image displaying an NFT in an embodiment.
[FIG. 17]
   FIG. 17 is an explanatory diagram illustrating a second example of a display image displaying an NFT in an embodiment.
[FIG. 18]

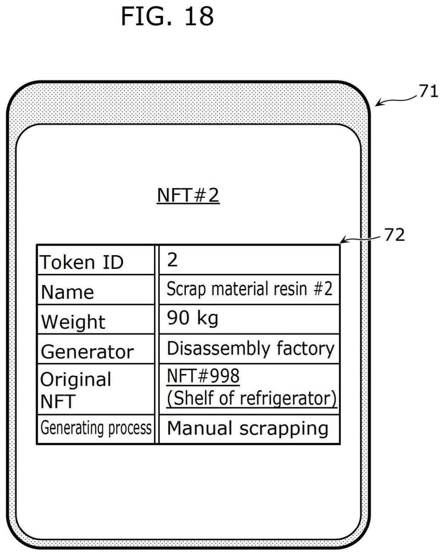

   FIG. 18 is an explanatory diagram illustrating a third example of a display image displaying an NFT in an embodiment.
[FIG. 19]

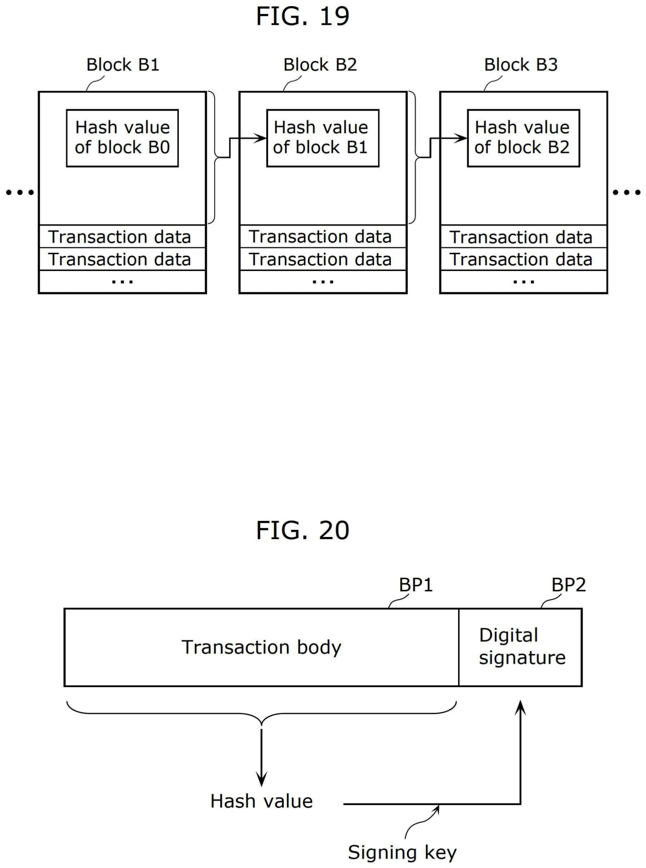

   FIG. 19 is an explanatory diagram illustrating a data structure of a blockchain, which is an example of a distributed ledger.
[FIG. 20]
   FIG. 20 is an explanatory diagram illustrating a data structure of transaction data.
[FIG. 21]

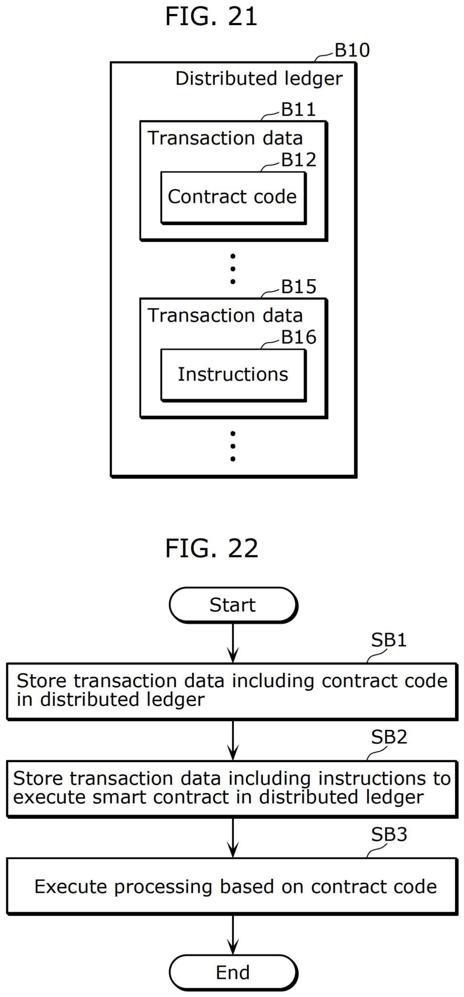

   FIG. 21 is an explanatory diagram illustrating transaction data pertaining to execution of a smart contract.
[FIG. 22]
   FIG. 22 is an explanatory diagram illustrating processing pertaining to execution of a smart contract.
[FIG. 23]

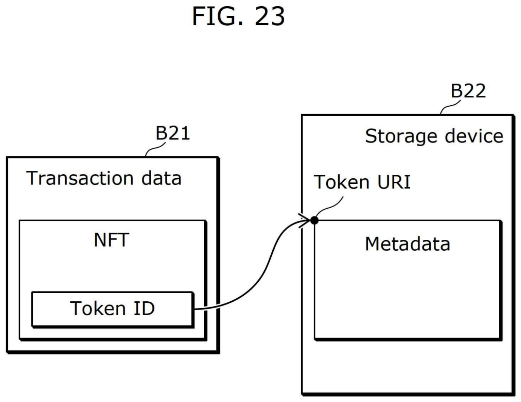

   FIG. 23 is an explanatory diagram illustrating structures of an NFT and metadata.

### [Description of Embodiment]

### (Underlying Knowledge Forming Basis of the Present Invention)

The present inventors found the following problems in the technique pertaining to the life cycle of a product, which has been described in the section "Background."

FIG. 1 is a schematic diagram illustrating the life cycle of an ordinary product. For example, the product is a product manufactured by a manufacturer. The product is specifically, but not limited to, a home appliance, an electronic device, or the like. Note that items that appear in the life cycle of a product are also called resources.

As illustrated in FIG. 1, resources are circulated while being transferred between a plurality of organizations during the life cycle of a product. Note that "Product", "Disassembled item", "Recycled item", and "Component" in the life cycle illustrated in FIG. 1 are equivalent to the resources appearing in the life cycle of the product.

Specifically, in the life cycle of a product, the product is assembled in an assembly factory and shipped.

When the product is purchased by a user, the product is moved to the user who purchases the product and is used by the user. When the user discards the product, the product is moved to a disassembly factory and is subjected to disassembling processing in the disassembly factory. Through the disassembling processing, the product is disassembled into components or materials (specifically, a synthetic resin (will also be referred simply to as a resin), a metal, a substrate, etc.) that constitute the product. The components or materials will also be referred to as disassembled items.

The disassembled items are moved to a recycling factory and are subjected to recycling processing (specifically, processing including collecting, sorting, washing, crushing, pulverizing, melting, refining, etc.). The disassembled items are subjected to recycling processing to be recycled into items (also referred to as recycled items) that can be used to manufacture a new product. The recycled items are moved to a manufacturing factory and can be used to manufacture new components. The newly manufactured components are moved to the assembly factory and assembled into a product, and the product is shipped.

In such an appropriate circulation of the life cycle of a product, disassembled items are generated from the product discarded by a user, recycled items are generated from the disassembled items, and components generated from the recycled items are used to manufacture a new product. This circulation enables the effective use of resources. Note that the effective use of resources decreases the amounts of resources necessary to manufacture a new product, bringing about the effect of reducing the consumption of energy such as electricity necessary to prepare additional resources.

The management of the life cycle of a product requires the management of the history of items (also called resources) appearing in the life cycle of the product. Specifically, the items appearing in the life cycle of the product include products, disassembled items, recycled items, and components. If the history of the items appearing in the life cycle of a product is not appropriately managed, an appropriate circulation of the life cycle of the product is obstructed.

The present invention provides an information processing method and the like that support an appropriate management of the history of items appearing in the life cycle of a product.

Hereinafter, aspects of the disclosure derived from the content of the disclosure of the present description will be described by way of example, and the effects and the like derived from the aspects of the disclosure will be described.
(1) An information processing method including: obtaining related information that is related to a second item generated based on a first item and includes at least first identification information identifying a first non-fungible token (NFT) associated one-to-one with the first item; and storing, in a distributed ledger, a second NFT that is associated one-to-one with the second item and includes the related information as metadata.
   According to the above aspect, the related information included in the metadata included in the second NFT associated one-to-one with the second item includes the identification information on the first NFT associated one-to-one with the first item serving as a basis for generation of the second item. As a result, information indicating that the first item has served as the basis for generation of the second item (in other words, information indicating that the second item has been generated based on the first item) is appropriately stored as history information in the distributed ledger in the form of the metadata on the NFT. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(2) The information processing method according to (1), in which each of the first item and the second item is a resource included in a life cycle of a product.
   According to the above aspect, the information indicating that, based on the first item being a resource involved in the life cycle of the product, the second item being another resource involved in the life cycle of the product has been generated is appropriately stored as history information in the distributed ledger in the form of the metadata on the NFT. The information processing method uses the history information appropriately stored in the distributed ledger to support an appropriate management of history information on a resource appearing in the life cycle of the product. In this manner, the information processing method supports the appropriate management of the history of an item appearing in the life cycle of the product.
(3) The information processing method according to (1) or (2), in which the first item is composed of a plurality of first items, the second item is a single second item, in the obtaining of the first identification information, the related information that is related to the single second item generated based on the plurality of first items and that includes at least a plurality of first identification information pieces is obtained, the plurality of first identification information pieces identifying a plurality of first NFTs that are each the first NFT and are associated one-to-one with the plurality of first items, and in the storing of the second NFT in the distributed ledger, a single second NFT associated with the single second item and including the related information as the metadata is stored in the distributed ledger.
   According to the above aspect, in the case of the plurality of first items and the single second item, information indicating that the plurality of first items have served as a basis for generation of the single second item (in other words, information indicating that the single second item has been generated based on the plurality of first items) is appropriately stored as history information in the distributed ledger in the form of the metadata on the NFT. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(4) The information processing method according to (1) or (2), in which the first item is a single first item, the second item is composed of a plurality of second items, in the obtaining of the first identification information, a plurality of related information pieces each of which is the related information are obtained, the plurality of related information pieces being related to the plurality of second items generated based on the single first item, the plurality of related information pieces including at least the first identification information identifying the first NFT associated with the single first item, and a plurality of second NFTs are stored in the distributed ledger, the plurality of second NFTs being associated one-to-one with the plurality of second items and each including the related information as the metadata.
   According to the above aspect, in the case of the single first item and the plurality of second items, information indicating that the single first item has served as a basis for generation of the plurality of second items (in other words, information indicating that the plurality of second items have been generated based on the single first item) is appropriately stored as history information in the distributed ledger in the form of the metadata on the NFT. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(5) The information processing method according to any one of (1) to (4), in which each of the first item and the second item is a resin, a metal, or a substrate.
   According to the above aspect, information pertaining to the first item and the second item each being a resin, a metal, or a substrate and indicating that the first item has served as the basis for generation of the second item is appropriately stored as history information in the distributed ledger in the form of the metadata on the NFT. In general, while a product is given identification information and is easily managed based on the identification information, it may be difficult to give identification information to a resin, a metal, or a substrate generated by disassembling a product. Hence, the information processing method uses the history information appropriately stored in the distributed ledger to support an appropriate management of history information on the resin, metal, or substrate as an item appearing in the life cycle of the product. In this manner, the information processing method supports the appropriate management of the history of an item appearing in the life cycle of the product.
(6) The information processing method according to (2), in which the resource is transferred between a plurality of organizations during the life cycle, and at least one of the first item or the second item is transferred between the plurality of organizations.
   According to the above aspect, information pertaining to the first item and the second item at least one of which is transferred between the plurality of organizations and indicating that the first item has served as the basis for generation of the second item is appropriately stored as history information in the distributed ledger in the form of the metadata on the NFT. The information processing method uses the history information appropriately stored in the distributed ledger to support an appropriate management of history information on an item appearing in the life cycle of the product involving the plurality of organizations. In this manner, the information processing method supports the appropriate management of the history of an item appearing in the life cycle of the product.
(7) The information processing method according to any one of (1) to (6), in which the related information includes identification information visibly assigned to an exterior of the second item or to an exterior of a container or a package of the second item.
   According to the above aspect, the related information including the identification information visibly assigned to the exterior of the second item or to the exterior of the container or the package of the second item is used to support the appropriate management of the history information on the item appearing in the life cycle of the product. In this manner, the information processing method supports the appropriate management of the history of an item appearing in the life cycle of the product.
(8) The information processing method according to any one of (1) to (7), in which the related information includes a type of the second item, information indicating a process by which the second item has been generated, or a quantity of the second item.
   According to the above aspect, the related information including the type of the second item, the information indicating the process by which the second item has been generated, or the quantity of the second item is used to support the appropriate management of the history information on the item appearing in the life cycle of the product. In this manner, the information processing method supports the appropriate management of the history of an item appearing in the life cycle of the product.
(9) The information processing method according to any one of (1) to (8), further including: when the second NFT is transferred, performing determination processing of determining whether the second NFT is legitimate, using the related information included in the second NFT; and invalidating the second NFT when the second NFT is determined to be not legitimate in the determination processing.
   According to the above aspect, the second NFT is invalidated when the second NFT is determined to be not legitimate in the transfer of the second NFT. It is thus possible to prevent the second NFT being not legitimate from being transferred. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(10) The information processing method according to any one of (1) to (8), further including: when the second NFT is stored, performing determination processing of determining whether the second NFT is legitimate, using the related information included in the second NFT; and transmitting instruction information that instructs modification of the related information when the second NFT is determined to be not legitimate in the determination processing.
   According to the above aspect, the modification of the related information is attempted when the second NFT is determined to be not legitimate in the storing of the second NFT. It is thus possible to prevent the second NFT being not legitimate from being stored. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(11) The information processing method according to any one of (1) to (10), further including: transmitting, to a terminal, first display information that is related to the second NFT and includes at least the first identification information to display the first display information on a display screen of the terminal; and when a user operation is performed on the first identification information displayed on the terminal, transmitting, to the terminal, second display information related to the first NFT to display the second display information on the display screen of the terminal.
   According to the above aspect, when the operation is performed on the first identification information in the display information related to the second NFT, the display information related to the first NFT is displayed on the terminal. It is thus possible to make a transition of the information displayed by the terminal from the display information related to the second item to the display information related to the first item serving as the basis for generation of the second item. Accordingly, tracing back the life cycle of the product, the information processing method can provide the related information related to the item appearing in the life cycle of the product using the history information appropriately stored in the distributed ledger. In this manner, the information processing method supports the appropriate management of the history of an item appearing in the life cycle of the product.
(12) The information processing method according to any one of (1) to (11), further including: when an item serving as a basis for generation of a third item is unknown, obtaining related information that is related to the third item and includes information indicating that the item serving as the basis for generation of the third item is unknown; and storing, in the distributed ledger, a third NFT that is associated one-to-one with the third item and includes the related information as metadata.
   According to the above aspect, the related information included in the metadata included in the third NFT associated one-to-one with the third item includes the information indicating that the item serving as the basis for generation of the third item is unknown. As a result, the information indicating that the item serving as the basis for generation of the third item is unknown is appropriately stored as history information in the distributed ledger in the form of the metadata on the NFT. The information processing method uses the history information appropriately stored in the distributed ledger to support an appropriate management of history information on an item appearing in the life cycle of the product. In this manner, the information processing method supports the appropriate management of the history of an item appearing in the life cycle of the product.
(13) An information processing device including: a processor; and a memory connected to the processor, in which using the memory, the processor: obtains related information that is related to a second item generated based on a first item and includes at least first identification information identifying a first non-fungible token (NFT) associated one-to-one with the first item; and stores, in a distributed ledger, a second NFT that is associated one-to-one with the second item and includes the related information as metadata.
   According to the above aspect, the same advantageous effects as those produced by the above-described information processing method are produced.
(14) A program for causing a computer to execute the information processing method according to (1).

According to the above aspect, the same advantageous effects as those produced by the above-described information processing method are produced.

Note that these general and specific aspects may be implemented using a system, a device, an integrated circuit, a computer program, or a computer-readable recording medium such as a CD-ROM, or any combination of systems, devices, integrated circuits, computer programs, or computer-readable recording media.

Hereinafter, an exemplary embodiment will be specifically described with reference to the accompanying Drawings.

Note that the exemplary embodiment described below shows a general or specific example. The numerical values, shapes, materials, constituent elements, the arrangement and connection of the constituent elements, steps, the processing order of the steps etc. shown in the following exemplary embodiment are mere examples, and therefore do not limit the present invention. Furthermore, among the constituent elements in the following exemplary embodiment, those not recited in any one of the independent claims representing the most generic concepts are described as optional constituent elements.

### [Embodiment]

In the present embodiment, an information processing method and an information processing system that support an appropriate management of the history of an item appearing in the life cycle of a product will be described.

FIG. 2 is a schematic diagram illustrating the general configuration of information processing system 1 in the present embodiment. In FIG. 2, information processing system 1 is an example of a system that supports an appropriate management of the history of an item appearing in the life cycle of a product.

As illustrated in FIG. 2, information processing system 1 includes ledger system 10. Information processing system 1 is connected to storage device 5, and terminals T1, T2, T3, and T4. Note that information processing system 1 may further include storage device 5, or terminal T1, T2, T3, or T4. The devices are connected to network N to be capable of performing communication over network N.

Ledger system 10 is an information processing system that stores information using a distributed ledger. The distributed ledger included in ledger system 10 stores the history of generation of a non-fungible token (NFT) associated one-to-one with an item in the real world, the history of transfer of the NFT, and the like. The NFT is an NFT with which the generation or transfer of the item in the real world is traced on the distributed ledger. Items in the real world include items that appear in the life cycle of the product (corresponding to resources).

Using the distributed ledger, ledger system 10 can execute processing by means of a smart contract. Through the processing executed by means of the smart contract, ledger system 10 can generate the NFT and transfer the NFT.

Ledger system 10 includes ledger servers 11, 12, and 13 (also referred to as ledger server 11 and the like) as a group of servers that store the distributed ledger. When at least one of ledger server 11 and the like receives transaction data, the transaction data is shared among all of ledger server 11 and the like and stored in the distributed ledger. Note that the number of ledger servers included in the group of servers is not limited to three. The number may be two or greater than three.

Ledger server 11 is a server being a computer that stores and manages the distributed ledger. Ledger server 11 stores the distributed ledger and updates the distributed ledger while synchronizing the distributed ledger with other ledger servers (specifically, with ledger servers 12 and 13).

Each of ledger servers 12 and 13 is the same server as ledger server 11 and operates independently of ledger server 11.

Note that ledger system 10 may include a plurality of ledger systems for different items. Specifically, ledger system 10 may include a ledger system for a resin, a ledger system for a metal, and a ledger system for a substrate. Here, the ledger system for a resin includes a distributed ledger that stores the history of generation of an NFT associated one-to-one with the resin, the history of transfer of the NFT, and the like. The same applies to the metal or the substrate. Note that ledger system 10 may include a ledger system for a product, a ledger system for a disassembled item, a ledger system for a recycled item, and a ledger system for a component.

Storage device 5 is a storage device storing data. Storage device 5 can be accessed (specifically subjected to reading or writing) by ledger system 10, or terminal T1, T2, T3 or T4 over network N. There may be one or more storage devices 5. Storage device 5 can store various types of information including related information (described later). The information stored in storage device 5 can be used as metadata on an NFT generated by ledger system 10.

Terminal T1 is an information processing device used by a user of a disassembly factory. Terminal T1 includes a processor, a memory, a user interface, and a communication interface. Using the user interface or the communication interface, terminal T1 can receive an input of information and can generate and display information, output information in the form of sound, or transmit and receive information. Terminal T1 can be, for example, a personal computer, a tablet, or a smartphone. The content of specific processing by terminal T1 will be described in detail later.

Terminals T2, T3, and T4 have the same configuration as terminal T1. Terminal T2 is an information processing device used by a user of a recycling factory. Terminal T3 is an information processing device used by a user of a manufacturing factory. Terminal T4 is an information processing device used by a user of an assembly factory. The content of specific processing by terminals T2, T3, and T4 will be described in detail later.

FIG. 3 is a block diagram illustrating a functional configuration of ledger server 11 in the present embodiment.

Ledger server 11 includes communication unit 101, ledger processor 102, executor 103, storage 104, and presentation controller 105, as functional units. At least some of the functional units included in ledger server 11 are implemented by a processor (e.g., a central processing unit (CPU)) included in ledger server 11 executing a program using a memory.

Communication unit 101 is a communication interface that is connected to network N so as to perform communication. Communication unit 101 may be a communication interface conforming to a wired communication standard (e.g., Ethernet (registered trademark), etc.), a communication interface conforming to a wireless communication standard (e.g., Wi-Fi (registered trademark), etc., or a mobile communications system (3G, 4G, or 5G, etc.)). Communication unit 101 is used when a functional unit included in ledger server 11 communicates with another device.

Ledger processor 102 executes processing pertaining to distributed ledger 111 or transaction data. Specifically, when receiving transaction data from terminal T1, T2, T3, or T4, or the like, ledger processor 102 performs control such that the digital signature included in the received transaction data is verified, and such that when the verification succeeds, the transaction data is stored in distributed ledger 111 stored in storage 104. To store the transaction data in distributed ledger 111, ledger processor 102 performs control such that a block including the transaction data to be stored is generated, and such that the block is stored in distributed ledger 111 when a consensus about the generated block is reached with ledger processor 102 of each of ledger servers 12 and 13, which are the other ledger servers.

Executor 103 executes information processing. For example, using distributed ledger 111, executor 103 can execute the information processing by executing a smart contract. Note that, in the case where no smart contract is used, executor 103 executes the information processing according to a conventional program code.

As the information processing, executor 103 performs the processing of generating an NFT. The NFT is associated one-to-one with an item in the real world. The NFT includes, as metadata, related information that is related to the item associated with the NFT. The related information includes at least an original NFT of the item associated with the NFT. The related information can further include at least one of a name, a quantity (specifically, a number, a weight, a volume, etc.), a generator, a generating process, an exterior ID, or a serial number. The metadata will be described later (see FIG. 6 to FIG. 11).

Note that there may be a many-to-one correspondence between items in the real world and an NFT or a one-to-many correspondence between an item in the real world and NFTs. For example, ten disassembled items may be associated with one trace NFT. One product or disassembled item may be associated with a plurality of trace NFTs. One product or disassembled item may be associated with different trace NFTs in different time periods, or one product or disassembled item may be associated with different trace NFTs by different organizations.

Storage 104 is a storage device storing information. Storage 104 stores distributed ledger 111. Storage 104 is implemented with a nonvolatile storage device (a solid state drive (SSD) or a hard disk drive (HDD)) or the like.

Distributed ledger 111 stores data having a structure in which blocks each including one or more pieces of transaction data are linked to form a chain. One or more pieces of transaction data stored in distributed ledger 111 include transaction data including the contract code of a smart contract, transaction data including instructions to execute the smart contract, or transaction data including the other information.

Presentation controller 105 performs control of causing terminal T1 or the like to present information regarding an NFT. For example, presentation controller 105 transmits information regarding an NFT owned by a disassembly factory to terminal T1 of a user of the disassembly factory, thus performing control of causing terminal T1 to present the information to the user. Presenting the information regarding the NFT by terminal T1 can include displaying the information on the display screen or outputting the information from the speaker in the form of sound.

Likewise, presentation controller 105 can perform control of causing terminal T2 of a user of the recycling factory to present information related to an NFT owned by the recycling factory, control of causing terminal T3 of a user of the manufacturing factory to present information related to an NFT owned by the manufacturing factory, or control of causing terminal T4 of a user of the assembly factory to present information related to an NFT owned by the assembly factory.

The delivery of an item and an NFT in the life cycle of a product will be described.

FIG. 4 and FIG. 5 are explanatory diagrams illustrating an example of the delivery of an item and an NFT in the present embodiment. FIG. 6, FIG. 7, and FIG. 11 are explanatory diagrams of examples of disassembled items in the present embodiment. FIG. 8 is an explanatory diagram of an example of a recycled item in the present embodiment. FIG. 9 is an explanatory diagram of an example of a component in the present embodiment. FIG. 10 is an explanatory diagram of an example of a product in the present embodiment. With reference to these drawings, a life cycle in which product #1 used by an end user is shipped again as a product (product #5) through disassembling and recycling will be described.

First, in the disassembly factory, processing on product #1 is performed (steps S101 to S104). At the time of step S101, product #1, which has been used by the end user, is in the disassembly factory. For example, product #1 is an air conditioner.

In step S101, the disassembly factory disassembles product #1 to generate resin #1. For example, resin #1 is chips of resin. More specifically, resin #1 is chips of resin generated by the crushing of a cover of the air conditioner (see (a) in FIG. 6).

In step S102, terminal T1 performs the generation processing of generating NFT #1 correspondingly to the generation of resin #1 in step S101. NFT #1 is an NFT corresponding to resin #1. NFT #1 includes information on an NFT corresponding to an item that is a material serving as a basis for generation of resin #1. The generation processing of generating NFT #1 will be described in detail later.

Note that the term "NFT #1" means an NFT with a token ID of 1, which is identification information. The same applies to other NFTs.

A specific example of metadata on NFT #1 is shown in (b) in FIG. 6.

The metadata on NFT #1 illustrated in (b) in FIG. 6 includes, as related information related to resin #1 corresponding to NFT #1, the name, the weight, the generator, the original NFT, the generating process, and the exterior ID of resin #1.

The name is information indicating a name given to resin #1. The name is, for example, a name given by the disassembly factory, which is a generator generating resin #1. Note that the name can include, as its part, the type of the item (a resin, a metal, a substrate, etc.).

The weight is information indicating the weight of resin #1. Note that the weight is an example of the quantity.

The generator is information indicating a generator that generates resin #1.

The original NFT is identification information indicating an NFT corresponding to an item serving as a basis for generation of resin #1. For example, the original NFT is the token ID of the NFT described above.

The generating process is information indicating a process by which resin #1 is generated from the item serving as the basis for generation of resin #1.

The exterior ID is identification information that is visibly assigned to the exterior of resin #1 or to the exterior of a container or a package of resin #1. Specifically, the container or the package includes a box, a bag, a bottle, a can, a jar, or the like containing resin #1, or a sheet, a film, or the like with which resin #1 is wrapped.

Specifically, the metadata illustrated in (b) in FIG. 6 indicates that the name of resin #1 is Scrap material resin #1 (also referred simply to as resin #1), the weight of resin #1 is 180 kg, the generator of resin #1 is the disassembly factory, the original NFT of resin #1 is NFT #999, the generating process of resin #1 is robot scrapping, and the exterior ID of resin #1 is Bag #001 (in other words, resin #1 is contained in a bag with an ID of 001, the same applies below).

In step S103 (see FIG. 4), the disassembly factory transfers resin #1 to the recycling factory. For example, resin #1 is transported from the disassembly factory to the recycling factory.

In step S104, terminal T1 performs the transfer processing of transferring NFT #1 to the recycling factory correspondingly to the transfer of resin #1 in step S103. The transfer processing of transferring NFT #1 will be described in detail later.

Next, in the disassembly factory, processing on product #2 is performed (steps S105 to S108). At the time of step S105, product #2 that has been used by the end user is in the disassembly factory. For example, product #2 is a refrigerator.

In step S105, the disassembly factory disassembles product #2 to generate resin #2. For example, resin #2 is chips of resin. More specifically, resin #2 is chips of resin generated by the crushing of a shelf of the refrigerator (see (a) in FIG. 7).

In step S106, terminal T1 performs the generation processing of generating NFT #2 correspondingly to the generation of resin #2 in step S105. NFT #2 is an NFT corresponding to resin #2. NFT #2 includes information on an NFT corresponding to an item that is a material serving as a basis for generation of resin #2. The generation processing of generating NFT #2 will be described in detail later.

A specific example of metadata on NFT #2 is shown in (b) in FIG. 7.

The metadata on NFT #2 illustrated in (b) in FIG. 7 includes, as related information related to resin #2 corresponding to NFT #2, the name, the weight, the generator, the original NFT, and the generating process of resin #2.

Specifically, the metadata illustrated in (b) in FIG. 7 indicates that the name of resin #2 is Scrap material resin #2 (also referred simply to as resin #2), the weight of resin #2 is 90 kg, the generator of resin #2 is the disassembly factory, the original NFT of resin #2 is NFT #998, and the generating process of resin #2 is manual scrapping (in other words, scrapping by human hands).

In step S107 (see FIG. 4), the disassembly factory transfers resin #2 to the recycling factory. For example, resin #2 is transported from the disassembly factory to the recycling factory.

In step S108, terminal T1 performs the transfer processing of transferring NFT #2 to the recycling factory correspondingly to the transfer of resin #2 in step S107. The transfer processing of transferring NFT #2 will be described in detail later.

Next, in the recycling factory, processing on resin #3 is performed (steps S111 to S114).

In step S111, the recycling factory performs recycling processing on resin #1 transferred in step S103 and resin #2 transferred in step S107 to generate resin #3. For example, resin #3 is a pelletized resin. More specifically, resin #3 is a pelletized resin generated by subjecting the mixture of resin #1 and resin #2 to heat treatment and molding (see (a) in FIG. 8).

In step S112, terminal T2 performs the generation processing of generating NFT #3 correspondingly to the generation of resin #3 in step S111. NFT #3 is an NFT corresponding to resin #3. NFT #3 includes identification information pieces on NFTs corresponding to resin #1 and resin #2, which are materials serving as a basis for generation of resin #3 (i.e., identification information on NFT #1 and identification information on NFT #2). The generation processing of generating NFT #3 will be described in detail later.

A specific example of metadata on NFT #3 is shown in (b) in FIG. 8.

The metadata on NFT #3 illustrated in (b) in FIG. 8 includes, as related information related to resin #3 corresponding to NFT #3, the name, the generator, the original NFTs, the generating process, and the exterior ID of resin #3.

Specifically, the metadata illustrated in (b) in FIG. 8 indicates that the name of resin #3 is polypropylene resin (PP), which is Recycled resin #3 (also referred simply to as resin #3), the weight of resin #3 is 270 kg, the generator of resin #3 is the recycling factory, the original NFTs of resin #3 are NFT #1 and NFT #2, the generating process of resin #3 is washing and addition of thermal stabilizer, and the exterior ID is Bag #003. The metadata also indicates that the weight of resin #1 corresponding to NFT #1 used for the generation of resin #3 is 180 kg and that the weight of resin #2 corresponding to NFT #2 used for the generation of resin #3 is 90 kg.

In step S113 (see FIG. 4), the recycling factory transfers resin #3 to the manufacturing factory. For example, resin #3 is transported from the recycling factory to the manufacturing factory.

In step S114, terminal T2 performs the transfer processing of transferring NFT #3 to the manufacturing factory correspondingly to the transfer of resin #3 in step S113. The transfer processing of transferring NFT #3 will be described in detail later.

Next, in the manufacturing factory, processing on a component is performed (steps S121 to S124, see FIG. 5).

In step S121, the manufacturing factory manufactures the component using resin #3 transferred in step S113. For example, the component is a lower frame of a washing machine. The component is one of components that constitute, in the future, the washing machine, which is the product (see (a) in FIG. 9). The component is manufactured by heating resin #3 to melt resin #3 and casting resin #3 into a mold to perform molding.

In step S122, terminal T3 performs the generation processing of generating NFT #4 correspondingly to the manufacture of the component in step S121. NFT #4 is an NFT corresponding to the component. NFT #4 includes identification information on NFT #3, which is an NFT corresponding to resin #3, which is a material serving as a basis for the component. The generation processing of generating NFT #4 will be described in detail later.

A specific example of metadata on NFT #4 is shown in (b) in FIG. 9.

The metadata on NFT #4 illustrated in (b) in FIG. 9 includes, as related information related to the component corresponding to NFT #4, the name, the generator, the original NFT, and the generating process of the component.

Specifically, the metadata illustrated in (b) in FIG. 9 indicates that the name of the component is "Lower frame of washing machine", the generator of the component is the manufacturing factory, the original NFT of the component is NFT #3, and the generating process of the component is molding. The metadata also indicates that the weight of resin #3 corresponding to NFT #3 used for the manufacture of the component is 2.7 kg.

In step S123 (see FIG. 5), the manufacturing factory transfers the component to the assembly factory. For example, the component is transported from the manufacturing factory to the assembly factory.

In step S124, terminal T3 performs the transfer processing of transferring NFT #4 to the assembly factory correspondingly to the transfer of the component in step S123. The transfer processing of transferring NFT #4 will be described in detail later.

In step S131, the assembly factory assembles product #5 (e.g., the washing machine) using the component transferred in step S123 (see (a) in FIG. 10).

In step S132, terminal T4 performs the generation processing of generating NFT #5 correspondingly to the assembly of product #5 in step S131. NFT #5 is an NFT corresponding to product #5. NFT #5 includes identification information on NFT #4, which is an NFT corresponding to the component serving as a basis for generation of product #5. The generation processing of generating NFT #5 will be described in detail later.

A specific example of metadata on NFT #5 is shown in (b) in FIG. 10.

The metadata on NFT #5 illustrated in (b) in FIG. 10 includes, as related information related to the component corresponding to NFT #5, the name, the generator, the original NFTs, the generating process, and the serial number of the product.

Specifically, the metadata illustrated in (b) in FIG. 10 indicates that the name of the product is Washing machine, the generator of the product is the assembly factory, the original NFTs of the product are NFT #4, NFT #104, and the like, the generating process of the product is machine assembly, and the serial number of the product is P12345.

In step S133 (see FIG. 5), the assembly factory ships product #5. For example, product #5 is delivered to the end user via a logistics operator or a transport operator.

After product #5 is delivered to the end user, product #5 is used by the end user. After the end user discards product #5, product #5 is delivered to the disassembly factory. Note that the number of end users using product #5 is not limited to one. The number may be more than one.

In step S141, the disassembly factory obtains product #5 discarded by the end user.

In step S142, the disassembly factory disassembles product #5 to generate resin #6. For example, resin #6 is chips of resin. More specifically, resin #6 is chips of resin generated by the crushing of a lower frame of the washing machine (see (a) in FIG. 11).

In step S143, terminal T1 performs the generation processing of generating NFT #6 correspondingly to the generation of resin #6 in step S142. NFT #6 is an NFT corresponding to resin #6. NFT #6 includes identification information on NFT #4, which is an NFT corresponding to resin #4 that is a material of product #5 serving as a basis for generation of resin #6. The generation processing of generating NFT #6 will be described in detail later.

A specific example of metadata on NFT #6 is shown in (b) in FIG. 11.

The metadata on NFT #6 illustrated in (b) in FIG. 11 includes, as related information related to resin #6 corresponding to NFT #6, the name, the generator, the original NFT, the generating process, and the exterior ID of resin #6.

Specifically, the metadata illustrated in (b) in FIG. 11 indicates that the name of resin #6 is Scrap material resin #6 (also referred simply to as resin #6), the generator of resin #6 is the disassembly factory, the original NFT of resin #6 is NFT #4, and the generating process of resin #6 is robot scrapping of a washing machine (the washing machine corresponding to NFT #5), and the exterior ID of resin #6 is Bag #011.

After step S143, the transfer of resin #6, the transfer of NFT #6, and the like are performed as in steps S103 and S104, and processing including recycling, manufacturing, and assembly is performed.

Through the processing illustrated in FIG. 4 and FIG. 5, the life cycle of the product is circulated.

Next, the generation processing of generating each NFT will be described.

Here will be described, as an example, the generation processing of generating NFT #3 corresponding to resin #3 that is performed by terminal T2 in step S111. The same applies to the generation processing of generating the other NFTs. In this case, resin #1 or resin #2 corresponds to a first item, and resin #3 corresponds to a second item. The first item and the second item can be resources involved in the life cycle of the product. More specifically, the first item and the second item can each be a resin, a metal, or a substrate. At least one of the first item or the second item can be a resource that is transferred between a plurality of organizations.

FIG. 12 and FIG. 13 are sequence diagrams illustrating the generation processing of generating an NFT in the present embodiment. FIG. 13 illustrates the processing for the case of No in step S215 in FIG. 12.

In step S201, terminal T2 obtains related information. The related information includes at least the token ID of an original NFT. The token ID of the original NFT is equivalent to identification information on an NFT corresponding to the item serving as a basis for generation of resin #3 (i.e., resin #1 or resin #2) (i.e., NFT #1 or NFT #2). The related information is used as metadata on the NFT to be generated in the generation processing.

In step S202, terminal T2 stores the related information obtained in step S201 in storage device 5. Specifically, terminal T2 transmits the related information to storage device 5. Storage device 5 receives and stores the transmitted related information.

In step S203, terminal T2 obtains the address indicating the storage location where the related information is stored in step S202. The address is, for example, a URI. More specifically, the address may be a URL.

In step S204, terminal T2 generates a pair of a private key and a public key (also referred to as a key pair) for the recycling factory. The key pair includes the private key and the public key corresponding to each other. Note that the relation between a private key and a public key included in one key pair will be denoted as "correspondence". The same applies hereinafter.

In step S205, terminal T2 generates generation request transaction data for requesting the generation of the NFT and transmits the generation request transaction data to ledger system 10. Ledger system 10 receives the transmitted generation request transaction data. The generation request transaction data includes at least the address indicating the storage location of the related information obtained in step S203, the public key of the recycling factory that is the owner of resin #3, and a digital signature (also referred simply to as a signature) of the recycling factory (in other words, the signature generated with the private key of the recycling factory).

In step S211, ledger system 10 verifies the signature of the generation request transaction data in response to the receiving of the generation request transaction data in step S205. Specifically, ledger system 10 verifies the signature included in the generation request transaction data using the public key of the recycling factory.

In step S212, ledger system 10 determines whether the verification of the signature in step S211 has succeeded. When determining that the verification of the signature has succeeded (Yes in step S212), ledger system 10 proceeds to step S213; otherwise, ledger system 10 performs error processing. Note that the illustration of processing performed when it is determined that the verification has failed is omitted for the sake of convenience. The error processing may include the processing of outputting information indicating that the verification has failed or the processing of invalidating the generation request transaction data.

In step S213, ledger system 10 stores the generation request transaction data received in step S205 in distributed ledger 111.

In step S214, ledger system 10 verifies the legitimacy of NFT #3, which is the NFT corresponding to resin #3 (i.e., an NFT to be generated in step S216 described later). Specifically, using the related information included in the generation request transaction data received in step S205, ledger system 10 verifies whether the generation of resin #3 based on resin #1 and resin #2 is legitimate from the viewpoint of weight, resource type, generating process, or the like.

For example, when the weight of resin #3 included in the related information falls within a valid range derived from the total value of the weight of resin #1 and the weight of resin #2, ledger system 10 can determine that the generation is legitimate from the viewpoint of weight. When the type of resin #3 included in the related information is proper as the type of the resource generated based on resin #1 and resin #2, ledger system 10 can determine that the generation is legitimate from the viewpoint of type. When the type of resin #3 included in the related information is properly generated from resin #1 and resin #2 through the generating process included in related information, ledger system 10 can determine that the generation is legitimate from the viewpoint of generating process.

In step S215, using the result of the verification of the legitimacy of NFT #3 in step S214, ledger system 10 determines whether NFT #3 is legitimate. When determining that NFT #3 is legitimate (Yes in step S215), ledger system 10 proceeds to step S216; otherwise (No in step S215), ledger system 10 proceeds to step S221 (see FIG. 13, described later).

In step S216, ledger system 10 generates NFT #3 using the generation request transaction data received in step S205. Generating NFT #3 includes storing NFT #3 in distributed ledger 111 and includes storing transaction data indicating the generation of NFT #3 in distributed ledger 111. The metadata on NFT #3 includes the address indicating the storage location of the related information. The owner of NFT #3 is the recycling factory.

In step S217, ledger system 10 transmits the token ID of NFT #3 generated in step S216 to terminal T2. Terminal T2 receives the transmitted token ID. Note that ledger system 10 may perform the transmission of the token ID as a response to the reception of the generation request transaction data in step S205.

In step S221 (see FIG. 13), ledger system 10 transmits instruction information that instructs the modification of the generation request transaction data to terminal T2. Terminal T2 receives the transmitted instruction information.

In step S222, in response to the receiving of the instruction information in step S221, terminal T2 obtains supplement information and transmits the supplement information to ledger system 10. Ledger system 10 receives the transmitted supplement information.

In step S223, ledger system 10 verifies the legitimacy of the related information with consideration given to the supplement information received in step S222. The verification of the legitimacy of the related information is the same as in step S214. After finishing step S223, ledger system 10 proceeds to step S215.

Note that the processing in steps S214 to S217, S221, and S223 may be performed by means of a smart contract based on the storage of the generation request transaction data in distributed ledger 111 in step S213. In this case, the generation request transaction data includes instructions to execute the smart contract for performing the processing, and executor 103 can perform the processing according to the instructions in response to the storing of the generation request transaction data in distributed ledger 111 (step S213).

Note that the first item may be composed of a plurality of first items, and the second item may be a single second item. In this case, when terminal T2 obtains first identification information in step S201, terminal T2 obtains related information that is related to the single second item generated based on the plurality of first items and that includes at least a plurality of first identification information pieces that identify a plurality of first NFTs associated one-to-one with the plurality of first items. When ledger system 10 stores the second NFT in distributed ledger 111 in step S216, ledger system 10 stores a single second NFT associated with the single second item and including the related information as the metadata in distributed ledger 111.

Note that the first item may be a single first item, and the second item may be composed of a plurality of second items. In this case, when terminal T2 obtains the first identification information in step S201, terminal T2 obtains a plurality of related information pieces that are related to the plurality of second items generated based on the single first item and that include at least first identification information that identifies a first NFT associated one-to-one with the single first item. Ledger system 10 also stores, in distributed ledger 111, a plurality of second NFTs associated one-to-one with the plurality of second items and each including the related information as metadata.

Note that in the case where an item serving as a basis for generation of an item is unknown, ledger system 10 may store an NFT in distributed ledger 111, using information indicating that the item is unknown. That is, in the case where the item serving as the basis for generation of the item (equivalent to a third item) is unknown, terminal T2 obtains related information related to the third item in step S201. The related information includes information indicating that the item serving as the basis for generation of the item is unknown. Ledger system 10 also stores, in distributed ledger 111, a third NFT that is associated one-to-one with the third item and includes the related information as metadata.

Next, the transfer processing of transferring an NFT will be described.

Here will be described, as an example, the transfer processing of transferring NFT #3 corresponding to resin #3 that is performed by terminals T2 and T3 in step S114. The same applies to the transfer processing of transferring the other NFTs.

FIG. 14 and FIG. 15 are sequence diagrams illustrating the transfer processing of transferring an NFT in the present embodiment. FIG. 15 illustrates the processing for the case of No in step S307 in FIG. 14.

In step S301, terminal T2 transmits the token ID of NFT #3 and the public key of the recycling factory to terminal T3. Terminal T3 receives the transmitted token ID and public key.

In step S302, terminal T3 transmits the token ID received in step S301 to ledger system 10. Ledger system 10 receives the transmitted token ID.

In step S303, ledger system 10 obtains the public key of the owner of the NFT corresponding to the token ID received in step S302 (i.e., NFT #3) (i.e., the recycling factory) from distributed ledger 111 and transmits the public key to terminal T3. Terminal T3 receives the transmitted public key.

In step S304, terminal T3 verifies the public key received from terminal T2 in step S301. Specifically, terminal T3 determines whether the public key received from terminal T2 in step S301 matches the public key received from ledger system 10 in step S303.

In step S305, terminal T3 determines whether the verification of the public key in step S304 has succeeded. Specifically, in the verification of the public key in step S304, when determining that the public key received from terminal T2 in step S301 matches the public key received from ledger system 10 in step S303, terminal T3 determines that the verification has succeeded; otherwise, terminal T3 determines that the verification has failed. When determining that the verification of the public key has succeeded (Yes in step S305), terminal T3 proceeds to step S306; otherwise (No in step S305), terminal T3 performs error processing. Note that the illustration of processing performed when it is determined that the verification has failed is omitted for the sake of convenience. The error processing may include the processing of outputting information indicating that the verification has failed or the processing of invalidating NFT #3.

In step S306, terminal T3 verifies the legitimacy of NFT #3. Specifically, using the related information included in the metadata on NFT #3, terminal T3 verifies whether the generation of resin #3 based on resin #1 and resin #2 is legitimate from the viewpoint of weight, resource type, generating process, or the like. The content of the verification processing is the same as that in step S214.

In step S307, using the result of the verification of the legitimacy of NFT #3 in step S306, terminal T3 determines whether NFT #3 is legitimate. When determining that NFT #3 is legitimate (Yes in step S307), terminal T3 proceeds to step S308; otherwise (No in step S307), terminal T3 proceeds to step S321 (see FIG. 15, described later).

In step S308, terminal T3 generates transfer transaction data for the transfer of NFT #3 from the recycling factory to the manufacturing factory and transmits the transfer transaction data to ledger system 10. Ledger system 10 receives the transfer transaction data.

In step S309, ledger system 10 stores the transfer transaction data received in step S308 in distributed ledger 111.

In step S321 (see FIG. 15), terminal T3 generates invalidation transaction data for the invalidation of NFT #3 and transmits the invalidation transaction data to ledger system 10. Ledger system 10 receives the transmitted invalidation transaction data.

In step S322, ledger system 10 stores the invalidation transaction data received in step S321 in distributed ledger 111.

In step S323, ledger system 10 invalidates NFT #3 in response to the storing of the invalidation transaction data in distributed ledger 111 in step S321. For example, ledger system 10 invalidates NFT #3 by setting an invalidation flag to the related information on NFT #3. NFT #3 on which the invalidation flag is set to the related information is treated as an NFT that does not appropriately correspond to the item. For example, the transfer processing corresponding to the transfer of the item with NFT #3 is inhibited.

Next, an example of the display of NFTs owned by the recycling factory or the like will be described.

FIG. 16 is an explanatory diagram illustrating a first example of a display image displaying an NFT in the present embodiment. Image 51 illustrated in FIG. 16 is an example of a display image displaying NFTs owned by the recycling factory at the time after terminal T2 has generated NFT #3 (step S112), for example.

Display data for displaying image 51 is generated and transmitted to terminal T2 by ledger system 10 in the case where, for example, terminal T2 transmits, to ledger system 10, a request for information on the NFTs owned by the recycling factory.

Image 51 illustrates the list of the NFTs owned by the recycling factory. Image 51 includes image 52 illustrating "NFT #3" as an NFT owned by the recycling factory.

Image 52 includes button image 52A for proceeding to the display of the related information on NFT #3.

When a user operation is performed on button image 52A, terminal T2 transmits, to ledger system 10, a request for the related information on NFT #3 in response to the receiving of the operation. In response to the transmitted request, ledger system 10 generates display data on the related information on NFT #3 and transmits the display data to terminal T2.

A user of the recycling factory can learn the NFTs owned by the recycling factory, by visually checking image 51 displayed on terminal T2. The user can make a transition to the display of the related information on the NFT by performing an operation on button image 52A.

FIG. 17 is an explanatory diagram illustrating a second example of a display image displaying an NFT in the present embodiment. Image 61 illustrated in FIG. 17 is an example of a display image displayed by terminal T2 when button image 52A in FIG. 16 is operated. Image 61 illustrates the related information on NFT #3.

Display data for displaying image 61 is generated and transmitted to terminal T2 by ledger system 10 in the case where terminal T2 transmits, to ledger system 10, a request for the related information on NFT #3.

FIG. 17 includes image 62 illustrating the related information. The content of the related information included in image 62 is the same as in (b) in FIG. 8.

Image 62 includes image 62A including the character string "NFT #1" and image 62B including the character string "NFT #2" as the identification information pieces on the NFTs serving as a basis for generation of NFT #3.

When an operation is performed on image 62A or 62B, a transition is made to the display of related information on an NFT corresponding to the image on which the operation is performed. For example, when an operation is performed on image 62B, a transition is made to the display of related information on NFT #2 corresponding to image 62B. In this case, terminal T2 transmits a request for the related information on NFT #2 to ledger system 10 in response to the receiving of the operation. In response to the transmitted request, ledger system 10 generates display data on the related information on NFT #2 and transmits the display data to terminal T2.

FIG. 18 is an explanatory diagram illustrating a third example of a display image displaying an NFT in the present embodiment. Image 71 illustrated in FIG. 18 is an example of a display image displayed by terminal T2 when image 62B in FIG. 17 is operated. Image 71 illustrates the related information on NFT #2.

Display data for displaying image 71 is generated and transmitted to terminal T2 by ledger system 10 in the case where terminal T2 transmits, to ledger system 10, a request for the related information on NFT #3.

FIG. 18 includes image 72 illustrating the related information. The content of the related information included in image 72 is the same as in (b) in FIG. 7.

In this manner, ledger system 10 can display the display information related to NFT #3 (equivalent to the second NFT) (equivalent to the first display information) on the display screen of terminal T2. Here, the first display information includes at least the identification information on NFT #2 (equivalent to the first identification information).

When a user operation is performed on the first identification information displayed on terminal T2, display information related to NFT #2 (equivalent to the first NFT) (equivalent to second display information) is transmitted to terminal T2, and thus the second display information can be displayed on the display screen of terminal T2.

### (Description of distributed ledger system)

Ledger system 10 in the above description (also referred to as a distributed ledger system) will be described in detail below.

The distributed ledger system is a system that stores and maintains information by means of a peer to peer (P2P) network technique for a plurality of nodes connected together. Each of the nodes is an information processing device in which a processor (e.g., a CPU) executes a program using a memory to perform predetermined processing.

In the distributed ledger system, the plurality of nodes maintain identical copies of information and continuously synchronize the information in an autonomous and distributed manner. This enables the distributed ledger system to store information appropriately while substantially preventing the information from being tampered with, without a privileged node (e.g., a centralized server or a server in a client-server model).

A device to access a distributed ledger is only required to access any one of the plurality of nodes included in the distributed ledger system. In other words, the device need not access a few devices such as centralized servers. Therefore, the concentration of a communication load or processing load on a centralized server, which can occur in a centralized system, is avoided. This produces such advantages that the resources of the nodes (the CPUs, the memories, etc.) are not required to have particularly high-performance specifications, and that communication lines to which the nodes are connected are not required to have particularly large communication capacities. This enables the distributed ledger system to be constituted by ordinary (or general-purpose) nodes or communication lines and can contribute to the effect of reducing necessary computer resources or communication resources or reducing the costs necessary for nodes or communication lines.

In addition, a distributed ledger system is capable of storing information with high fault tolerance or allowing information to be referred to with high fault tolerance. In general, a plurality of nodes included in a distributed ledger system are arranged being physically distributed or being distributed across the network. A distributed ledger system stops if a plurality of nodes included in the distributed ledger system all stop. However, it is rare for the distributed ledger system to stop because it is rare for all of the plurality of nodes physically distributed or distributed across the network to stop. This is considered to be an advantage over a centralized system, which can fail to store information or fail to allow information to be referred to when stopping.

With reference to FIG. 19 to FIG. 23, the data structure of a distributed ledger, the execution of a smart contract, and the data structure of an NFT will be described.

FIG. 19 is an explanatory diagram illustrating the data structure of a blockchain, which is an example of the distributed ledger.

In the blockchain, blocks, which are recording units of the blockchain, are connected to form a chain. Each of the blocks includes a plurality of pieces of transaction data and the hash value of its previous block.

FIG. 19 illustrates blocks B1, B2, and B3 included in the blockchain.

For example, block B2 includes the hash value of block B1, the previous block. The hash value of block B1 is a hash value calculated by computation performed on the content of block B1 according to a hash algorithm.

Block B3 includes a hash value calculated from the plurality of pieces of transaction data included in block B2 and the hash value of block B1, as the hash value of block B2.

As seen from the above, the blockchain has the configuration in which the blocks each including the content of its previous block in the form of a hash value are connected to form a chain. Thus, the blockchain can effectively prevent tampering with recorded transaction data.

If past transaction data is altered (in other words, tampered with), the hash value of the block including the transaction data differs from the value before the alteration. In this case, in order to make the block including the altered transaction data appear authentic, it is necessary to rebuild all the blocks following the block, which includes the altered transaction data, in the distributed ledger stored in each of multiple servers. This task is extremely difficult in reality. These characteristics can make it substantially impossible to tamper with transaction data included in a blockchain.

Note that, to store transaction data in a blockchain, a node generates a block including the transaction data to be stored and executes processing based on a consensus algorithm for the generated block with the other nodes to reach a consensus with them. When the consensus is reached, the node performs control to store the block in the blockchain. In this manner, a plurality of nodes operating in an autonomous and distributed manner can connect a valid block to the blockchain. As the consensus algorithm, practical byzantine fault tolerance (PBFT) may be used, or proof of work (PoW), proof of stake (PoS), or the like may be used. Note that, in the case where Hyperledger fabric is used as an example of a distributed ledger technology, the consensus algorithm need not be executed.

FIG. 20 is an explanatory diagram illustrating the data structure of transaction data.

Transaction data illustrated in FIG. 20 includes transaction body BP1 and digital signature BP2 (will also be referred to simply as a signature). Transaction body BP1 is the data body included in the transaction data. Digital signature BP2 is generated by encrypting the hash value of transaction body BP1 with a signing key of the creator of the transaction data (in other words, a private key).

Using digital signature BP2 included in the transaction data, a node receiving the transaction data can verify whether transaction body BP1 is valid (in other words, it is not tampered with). This can make it substantially impossible to tamper with the data included in transaction body BP1. In addition, by storing the transaction data that has been successfully verified in a blockchain, it is possible to maintain the validity of the transaction data stored in the blockchain.

In the above-described manner, transaction data included in a blockchain are stored in the blockchain in such a manner that the transaction data are linked together using the hash values of the transaction data and hash values of blocks. As a result, the transaction data included in the blockchain are stored and maintained being substantially free from tampering. This is an advantage over a database or a distributed database, in which a collection of data is simply stored.

FIG. 21 is an explanatory diagram illustrating transaction data pertaining to the execution of a smart contract. FIG. 22 is an explanatory diagram illustrating processing pertaining to the execution of a smart contract.

With reference to FIG. 21 and FIG. 22, a series of steps pertaining to the execution of the smart contract using a distributed ledger will be described.

In step SB1, a node stores, in distributed ledger B10, transaction data B11 including contract code B12 in which the processing of the smart contract is written. For example, the node obtains transaction data B11 by receiving transaction data B11 from a certain information processing device through communication or by generating transaction data B11 by itself and stores obtained transaction data B11 in distributed ledger B10. Step SB1 is performed before the execution of the smart contract.

In step SB2, the node stores, in distributed ledger B10, transaction data B15 including instructions B16 to execute the smart contract. For example, the node receives transaction data B15 from a certain information processing device through communication and stores received transaction data B15 in distributed ledger B10.

In step SB3, in response to the storing of transaction data B15 including instructions B16 in distributed ledger B10 in step SB2, the node reads contract code B12 from distributed ledger B10 and executes the processing based on contract code B12. The result of the processing can be included in transaction data and stored in distributed ledger B10.

By the series of steps, upon receiving transaction data B15 including instructions B16 to execute the smart contract, the distributed ledger system executes the processing according to instructions B16 automatically (in other words, with no manual operations). Thus, it is possible to execute the processing with high efficiency (in other words, at high speed or in a short time). Achieving highly efficient processing brings about the effect of the reduction in power consumption. In addition, dispensing with manual operations makes it possible to avoid the tampering of information or misconduct by a person, or a human error before it happens. Furthermore, since the result of the processing executed in such a manner is stored in a blockchain, it is substantially impossible to tamper with the result of the processing.

FIG. 23 is an explanatory diagram illustrating the structures of an NFT and metadata. The NFT is a token stored in a distributed ledger. The NFT is a unique token (in other words, a non-fungible token). The NFT is standardized according to, but not limited to, for example, Ethereum Request for Comments (ERC) 721. The NFT may conform to a standard different from ERC 721 or may be non-standard (e.g., specific to an organization). Note that although ERC721 is a standard about a unique token, the NFTs described in the present description need not necessarily be unique tokens.

FIG. 23 illustrates transaction data B21 stored in a distributed ledger. Transaction data B21 stores an NFT. The NFT includes a token ID (i.e., identification information with which the NFT can be uniquely identified).

The NFT includes metadata. The metadata can be arranged at a location accessible over a network (e.g., storage device B22). A token URI indicating the location of the metadata is calculated from the token ID of the NFT and a predetermined base URI.

Information managed as the NFT may be included in transaction data B21 or may be included in the metadata. The inclusion of the information managed as the NFT in the metadata produces such an advantage that the amount of information included in transaction data B21 (in other words, information included in a blockchain) can be reduced. In this case, the metadata can be considered to contain the actual conditions of the information managed as the NFT. In the case where an image is managed in the form of an NFT, a URL indicating image data on the image can be managed as the NFT.

Note that each of the constituent elements in the embodiment described above may be configured in the form of an exclusive hardware product, or may be implemented by executing a software program suitable for the constituent element. Each of the constituent elements may be implemented by means of a program executor, such as a CPU and a processor, reading and executing the software program recorded on a recording medium such as a hard disk or a semiconductor memory. Here, the software program for implementing the information processing device and the related technologies according to the embodiment described above is a program described below.

That is, the program causes a computer to execute an information processing method including: obtaining related information that is related to a second item generated based on a first item and includes at least first identification information identifying a first non-fungible token (NFT) associated one-to-one with the first item; and storing, in a distributed ledger, a second NFT that is associated one-to-one with the second item and includes the related information as metadata.

Hereinbefore, an information processing method and the related technologies according to one or more aspects have been described based on an exemplary embodiment, but the present invention is not limited to this embodiment. Various modifications of the present embodiment as well as forms resulting from combinations of constituent elements in different embodiments that may be conceived by those skilled in the art may be included within the scope of one or more aspects so long as such modifications and forms do not depart from the essence of the present invention.

### [Industrial Applicability]

The present invention is applicable to a system that encourages effective use of resources.

### [Reference Signs List]

1 information processing system
5, B22 storage device
10 ledger system
11, 12, 13 ledger server
51, 52, 61, 62, 62A, 62B, 71, 72 image
52A button image
101 communication unit
102 ledger processor
103 executor
104 storage
105 presentation controller
111, B10 distributed ledger
B1, B2, B3 block
B11, B15, B21 transaction data
B12 contract code
B16 instruction
BP1 transaction body
BP2 digital signature
N network
T1, T2, T3, T4 terminal

## Claims

1. An information processing method comprising:
obtaining related information that is related to a second item generated based on a first item and includes at least first identification information identifying a first non-fungible token (NFT) associated one-to-one with the first item; and
storing, in a distributed ledger, a second NFT that is associated one-to-one with the second item and includes the related information as metadata.

2. The information processing method according to claim 1, wherein
each of the first item and the second item is a resource included in a life cycle of a product.

3. The information processing method according to claim 1 or 2, wherein
the first item is composed of a plurality of first items,
the second item is a single second item,
in the obtaining of the first identification information, the related information that is related to the single second item generated based on the plurality of first items and that includes at least a plurality of first identification information pieces is obtained, the plurality of first identification information pieces identifying a plurality of first NFTs that are each the first NFT and are associated one-to-one with the plurality of first items, and
in the storing of the second NFT in the distributed ledger, a single second NFT associated with the single second item and including the related information as the metadata is stored in the distributed ledger.

4. The information processing method according to claim 1 or 2, wherein
the first item is a single first item,
the second item is composed of a plurality of second items,
in the obtaining of the first identification information, a plurality of related information pieces each of which is the related information are obtained, the plurality of related information pieces being related to the plurality of second items generated based on the single first item, the plurality of related information pieces including at least the first identification information identifying the first NFT associated with the single first item, and
a plurality of second NFTs are stored in the distributed ledger, the plurality of second NFTs being associated one-to-one with the plurality of second items and each including the related information as the metadata.

5. The information processing method according to claim 1 or 2, wherein
each of the first item and the second item is a resin, a metal, or a substrate.

6. The information processing method according to claim 2, wherein
the resource is transferred between a plurality of organizations during the life cycle, and
at least one of the first item or the second item is transferred between the plurality of organizations.

7. The information processing method according to claim 1 or 2, wherein
the related information includes identification information visibly assigned to an exterior of the second item or to an exterior of a container or a package of the second item.

8. The information processing method according to claim 1 or 2, wherein
the related information includes a type of the second item, information indicating a process by which the second item has been generated, or a quantity of the second item.

9. The information processing method according to claim 1 or 2, further comprising:
when the second NFT is transferred, performing determination processing of determining whether the second NFT is legitimate, using the related information included in the second NFT; and
invalidating the second NFT when the second NFT is determined to be not legitimate in the determination processing.

10. The information processing method according to claim 1 or 2, further comprising:
when the second NFT is stored, performing determination processing of determining whether the second NFT is legitimate, using the related information included in the second NFT; and
transmitting instruction information that instructs modification of the related information when the second NFT is determined to be not legitimate in the determination processing.

11. The information processing method according to claim 1 or 2, further comprising:
transmitting, to a terminal, first display information that is related to the second NFT and includes at least the first identification information to display the first display information on a display screen of the terminal; and
when a user operation is performed on the first identification information displayed on the terminal, transmitting, to the terminal, second display information related to the first NFT to display the second display information on the display screen of the terminal.

12. The information processing method according to claim 1 or 2, further comprising:
when an item serving as a basis for generation of a third item is unknown, obtaining related information that is related to the third item and includes information indicating that the item serving as the basis for generation of the third item is unknown; and
storing, in the distributed ledger, a third NFT that is associated one-to-one with the third item and includes the related information as metadata.

13. An information processing device comprising:
a processor; and
a memory connected to the processor, wherein
using the memory, the processor:
obtains related information that is related to a second item generated based on a first item and includes at least first identification information identifying a first non-fungible token (NFT) associated one-to-one with the first item; and
stores, in a distributed ledger, a second NFT that is associated one-to-one with the second item and includes the related information as metadata.

14. A program for causing a computer to execute the information processing method according to claim 1.
